# EUROPÄISCHE PATENTSCHRIFT

(11) **EP 2 466 553 B1**
(45) Veröffentlichungstag und Bekanntmachung des Hinweises auf die Patenterteilung: **26.06.2019**
(21) Anmeldenummer: 11192847.9
(22) Anmeldetag: 09.12.2011
(51) Int. Cl.: G07C 7/00, G07C 5/00, G06K 13/08

(54) **Kartenlesegerät und seine Verwendung**
Card reader device and its use
Appareil de lecture de carte et son utilisation

(30) Priorität: 17.12.2010 DE 102010055015
(43) Veröffentlichungstag der Anmeldung: 20.06.2012
(73) Patentinhaber: Continental Automotive GmbH, 30165 Hannover (DE)
(72) Erfinder: Helbig, Patrik, 72172 Sulz am Neckar (DE)

(56) Entgegenhaltungen:
- EP-A2- 0 313 882
- EP-A2- 0 624 856
- WO-A1-00/08589
- DE-A1-102007 038 690
- GB-A- 2 329 272
- US-B1- 6 491 226
- Heavy Truck Electronic Interfaces Working Group: "Digital Tachograph User guide for remote company card authentication and remote data downloading Vers. 01.00", , 15. September 2009 (2009-09-15), XP055298415, Gefunden im Internet: URL:http://www.fms-standard.com/down_load/ User_Guide_Version_01.00_090915.pdf [gefunden am 2016-08-30]

## Beschreibung

Die Erfindung bezieht sich auf ein mittels einer Datenübertragungsverbindung an eine Fahrtschreiberdatenverarbeitungsanlage anschließbares Kartenlesegerät für eine als Chipkarte ausgebildete Fahrtschreiberkarte. Außerdem bezieht sich die Erfindung auf eine Verwendung eines eine als Chipkarte ausgebildete Fahrtschreiberkarte aufweisenden Kartenlesegeräts in einer Anordnung mit einem Fahrtschreiber und einer Fahrtschreiberdatenverarbeitungsanlage.

Ein vorgenannter Fahrtschreiber ist als in einem Nutzkraftfahrzeug angeordneter digitaler Tachograph mit einem Massenspeicher, in welchem Daten elektronisch gespeichert werden, bekannt. Eine Authentifizierung gegenüber dem Fahrtschreiber erfolgt mittels als Chipkarte ausgebildeten Fahrtschreiberkarten, von denen verschiedene Typen bekannt sind und verwendet werden: Ein das Nutzkraftfahrzeug betreibendes Unternehmen verfügt über mindestens eine Unternehmenskarte, welche zu einem Auslesen der Fahrzeugdaten aus dem Massenspeicher berechtigt. Außerdem ist für jeden möglichen Fahrer des Nutzfahrzeugs eine eigene Fahrerkarte vorgesehen, welche Fahreraktivitäten, Ereignisse, Störungen und Fahrzeugwechsel speichert. Darüber hinaus gibt es Kontrollkarten, die Kontrollorganen einen Zugriff auf gesetzesrelevante, in dem Fahrtschreiber gespeicherte Daten ermöglichen, und Werkstattkarten, welche Kalibrierfunktionen des Fahrtschreibers freischalten können und zu Test- und Prüfzwecken eingesetzt werden können.

Zum Archivieren und Auswerten der Daten aus dem Fahrtschreiber ist es bekannt, die Daten von dem in dem Kraftfahrzeug angeordneten Fahrtschreiber per Funk auf einen Arbeitsplatzrechner in einem Büro des das Nutzkraftfahrzeug betreibenden Unternehmens herunterzuladen. Dabei ist zur Authentifizierung eine in ein an den Arbeitsplatzrechner angeschlossenes Kartenlesegerät eingeführte Unternehmenskarte erforderlich. Durch eine unbeaufsichtigte Entnahme der Unternehmenskarte aus dem Kartenlesegerät könnte nicht nur die Unternehmenskarte abhandenkommen, sondern es besteht durch Störung der Authentifizierung ferner die Gefahr einer Unterbrechung des Herunterladens der Daten und möglicherweise auch einer Verletzung von Datenschutzvorschriften, insbesondere hinsichtlich heruntergeladener Fahrerdaten. Daher ist eine ständige Aufsicht während des Herunterladens von Daten von dem Fahrtschreiber erforderlich, oder es muss ein Zugang zu dem Raum, in welchem sich Unternehmenskarte und Arbeitsplatzrechner befinden, während des Herunterladens zuverlässig verhindert werden.

Aus US 6 491226 B1 ist eine Vorrichtung zum Verhindern eines Herausziehens einer kartenförmigen Funktionsvorrichtung aus einer Informationsverarbeitungsvorrichtung bekannt.

Ein Datenherunterladeverfahren zwischen einem Fahrzeug und einer Fuhrparkabwicklungsstelle eines Unternehmens ist aus dem Dokument "Heavy Truck Electronic Interfaces Working Group - DTCO: Digital Tachograph User guide for remote company card authentication and remote data downloading Vers. 01.00" bekannt.

Einen elektrischen Verbinder mit einer Verriegelung zum Halten einer IC-Karte offenbart WO 00/08589 A1.

Ferner ist aus GB 2 329 272 A ein Kartenterminal mit einem Gehäuse zum Aufnehmen einer Smartcard bekannt.

Eine Datenkartenaufnahme für Anwendungsfälle, bei denen zwei Datenkarten gleichzeitig vorgesehen sind, ist aus EP 0 313 882 A2 bekannt, wobei die Datenkarten in der Datenkartenaufnahme paarweise aufnehmbar sind.

Weiterhin offenbart DE 10 2007 038 690 A1 ein Verfahren zur Übertragung von fahrer- und/oder fahrzeugbezogenen Daten von einem Tachographen an ein externes Gerät.

Ein Fahrtschreiber mit Schächten für eine Aufnahme von Datenkarten ist aus EP 0 624 856 A2 bekannt.

Davon ausgehend liegt der Erfindung die Aufgabe zugrunde, mit verringertem Aufwand Datenschutz- und Sicherungsanforderungen im Zusammenhang mit einem Herunterladen von Daten eines in einem Kraftfahrzeug angeordneten Fahrtschreibers auf eine von dem Fahrtschreiber entfernte Datenverarbeitungsanlage Genüge zu tun.

Diese Aufgabe wird erfindungsgemäß gelöst durch ein Kartenlesegerät nach Anspruch 1. Die oben genannte Aufgabe wird erfindungsgemäß auch gelöst durch die Verwendung eines entsprechenden Kartenlesegeräts in einer einen Fahrtschreiber und eine Fahrtschreiberdatenverarbeitungsanlage aufweisenden Anordnung zur Fahrtschreiberdatenübertragung zwischen dem Fahrtschreiber und der Fahrtschreiberdatenverarbeitungsanlage nach Anspruch 5.

Die Anordnung bildet in ihrer Gesamtheit eine Funktionseinheit zur Übertragung der Fahrtschreiberdaten. Die Fahrtschreiberdatenverarbeitungsanlage ist eine Datenverarbeitungsanlage, welche dazu ausgebildet ist, Fahrtschreiberdaten zu verarbeiten; dazu weist die Datenverarbeitungsanlage beispielsweise eine spezielle Software, eine Fahrtschreiberdatenverarbeitungssoftware, auf. Die Fahrtschreiberdatenverarbeitungsanlage und das Kartenlesegerät sind vorzugsweise stationär an einem Ort, zum Beispiel in einem Büro eines das Nutzfahrzeug betreibenden Unternehmens, das heißt einer Spedition, angeordnet; die Fahrtschreiberdatenverarbeitungsanlage kann aber auch ein tragbarer Rechner und wie das Kartenlesegerät mobil sein. Die Fahrtschreiberdatenverarbeitungsanlage und das Kartenlesegerät sind baulich voneinander unabhängig, das heißt sie bilden keine Baueinheit und sind insbesondere nicht in einem gemeinsamen Gehäuse untergebracht. Das Kartenlesegerät sowie die Chipkarte weisen jeweils korrespondierende elektrische Kontakte auf. Die Kontakte der in das Kartenlesegerät eingeführten Chipkarte sind mit den korrespondierenden Kontakten des Kartenlesegerätes elektrisch kontaktiert. Mit der Erfindung ist es vorteilhaft nicht mehr erforderlich, die Chipkarte häufig in das Kartenlesegerät einzuführen und wieder zu entnehmen, sondern die Chipkarte kann, da sie erfindungsgemäß geschützt ist, über einen längeren Zeitraum in dem Kartenlesegerät verbleiben; dadurch werden die elektrischen Kontakte der Chipkarte und des Kartenlesegerätes erheblich verringert beansprucht und unterliegen einem deutlich verminderten Verschleiß. Von besonderem Vorteil ist bei dem erfindungsgemäßen Kartenlesegerät der einfache, zuverlässige Schutz der in dem Kartenlesegerät befindlichen Fahrtschreiberkarte vor unberechtigtem Zugriff, insbesondere vor unberechtigter Entnahme aus dem Kartenlesegerät, mit Hilfe der mechanischen Entnahmesicherung. Gleichzeitig wird damit auch eine mögliche Störung der Fahrtschreiberdatenübertragung infolge unberechtigter Entfernung der Chipkarte zuverlässig verhindert. Grundsätzlich ist das Sicherungsbauteil durch einen Nichtberechtigten nicht zerstörungsfrei von dem Kartenlesegerät entfernbar. Dadurch ist eine gegebenenfalls dennoch erfolgte unberechtigte Entnahme der Fahrtschreiberkarte aus dem Kartenlesegerät vorteilhaft unmittelbar dadurch zu erkennen, dass das Sicherungsbauteil - sofern es noch vorhanden ist - eine Beschädigung aufweist.

Besonders einfach im Aufbau und zuverlässig in der Handhabung ist das Kartenlesegerät, da gemäß der Erfindung die Sicherungsvorrichtung ein Schloss zum Verschließen der Chipkarte in dem Kartenlesegerät aufweist. Das Schloss kann zum Beispiel ein Zahlenschloss sein, dessen Öffnungscode nur einem Berechtigten bekannt ist, oder ein mit einem mechanischen Schlüssel zu öffnendes Schloss, wobei nur der Berechtigte den zum Öffnen erforderlichen mechanischen Schlüssel besitzt.

Gemäß der Erfindung ist das Schloss derart ausgebildet, dass es in seinem geschlossenen Zustand das Sicherungsbauteil an einem Gehäusegrundkörper des Kartenlesegerätes anschließt. Auf diese Weise kann bei einfachem Aufbau ein besonders haltbarer Verschluss der Fahrtschreiberkarte in dem Kartenlesegerät gewährleistet werden.

Zusätzlich ein guter Schutz der Fahrtschreiberkarte gegen Beschädigung und Verschmutzung, insbesondere Einstauben, kann vorteilhaft erreicht werden, da gemäß der Erfindung das Sicherungsbauteil eine die Chipkarte umgreifende Abdeckhaube ist.

Einer vorteilhaften Weiterbildung der Erfindung entsprechend weist das Sicherungsbauteil an einer Seite entgegen einer Einführrichtung der Chipkarte in das Kartenlesegerät einen Kartenanschlag für die Chipkarte auf. Damit kann vorzugsweise ein gemeinsames und gleichzeitiges Fügen von Chipkarte und Sicherungsbauteil einerseits sowie einem die mit der Chipkarte korrespondierenden elektrischen Kontakte des Kartenlesegerätes aufweisenden Gehäusegrundkörpers des Kartenlesegerätes andererseits erfolgen. Vorzugsweise ist der Kartenanschlag ein mechanischer Anschlag. Besonders vorteilhaft ist es, wenn der Kartenanschlag derart ausgebildet ist, dass sich bei einem vollständigen Zusammenfügen von Sicherungsbauteil und Gehäusegrundkörper die Chipkarte automatisch in einer Position befindet, in welcher eine sichere elektrische Kontaktierung der Kontakte des Kartenlesegerätes mit den Kontakten der Chipkarte gewährleistet ist.

Dabei ist es insbesondere für eine sichere Handhabung und zuverlässige Funktion sowie einen einfachen Aufbau von Vorteil, wenn gemäß einer Weiterbildung der Erfindung die Abdeckhaube an ihrer Innenseite entgegen der Einführrichtung der Chipkarte in das Kartenlesegerät den Kartenanschlag aufweist.

Für eine besonders zuverlässige elektrische Kontaktierung von Chipkarte und Kartenlesegerät ist es von Vorteil, wenn gemäß einer anderen Weiterbildung der Erfindung eine die eingeführte Chipkarte festhaltende Rast- oder Klemmeinrichtung vorgesehen ist. Die Rast- oder Klemmeinrichtung ist bevorzugt in einem Gehäusegrundkörper des Kartenlesegerätes angeordnet, in welchen Gehäusegrundkörper die Chipkarte eingeführt ist. Insbesondere zusammen mit einem vorgenannten mechanischen Kartenanschlag der Abdeckhaube kann auf einfache Weise durch Kartenanschlag und Rast- oder Klemmeinrichtung sichergestellt werden, dass die Fahrtschreiberkarte im Kartenlesegerät sicher gehalten wird, insbesondere sicher einrastet, und auch zuverlässig (über die elektrischen Kontakte der Karte und des Lesegerätes) gelesen werden kann.

Ein zusätzlicher Schutz der Fahrtschreiberdaten wird gemäß einer Weiterbildung der Anordnung vorteilhaft dadurch erreicht, dass die Sicherungsvorrichtung ein Schloss zum Verschließen der Chipkarte in dem Kartenlesegerät aufweist und dass das Schloss einen die Fahrtschreiberdatenübertragung zwischen dem Fahrtschreiber und der Fahrtschreiberdatenverarbeitungsanlage in geschlossener Stellung des Schlosses freigebenden Schlüsselschalter aufweist. Ausführungsbeispiele der Erfindung sind in der Zeichnung schematisch dargestellt und werden im Folgenden näher beschrieben. Es zeigen:
- Figur 1: eine Anordnung mit einem Fahrtschreiber, einer Fahrtschreiberdatenverarbeitungsanlage und einem Kartenlesegerät,
- Figur 2: ein Kartenlesegerät mit einer Chipkarte,
- Figur 3: ein Sicherungsbauteil für ein Kartenlesegerät und
- Figur 4: ein Kartenlesegerät mit einem Sicherungsbauteil und mit einem Schloss.

Sich jeweils entsprechende Elemente sind in allen Figuren mit gleichen Bezugszeichen versehen.

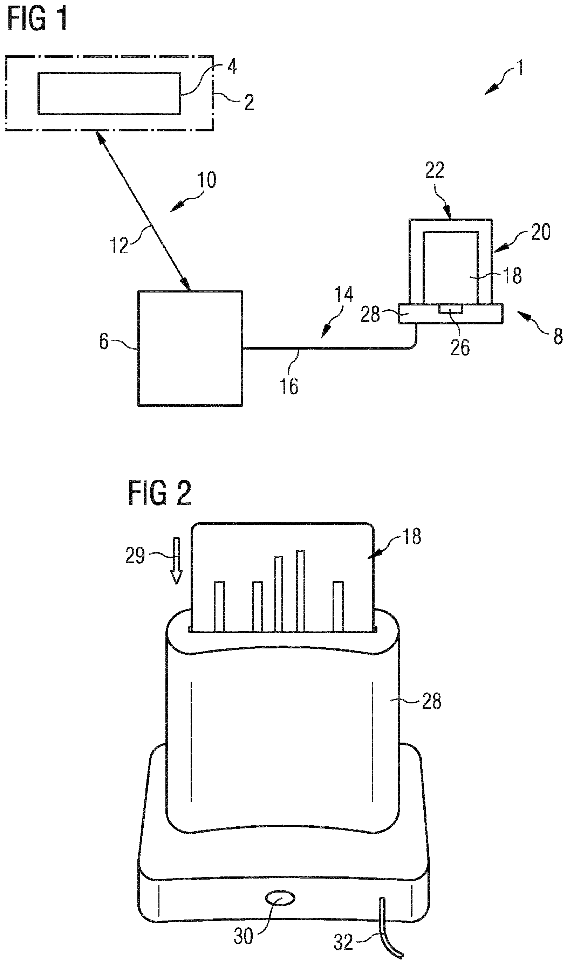

In Figur 1 ist in schematisierter Form eine Anordnung 1 mit einem in einem Kraftfahrzeug 2 angeordneten Fahrtschreiber 4, einer Fahrtschreiberdatenverarbeitungsanlage 6 und einem Kartenlesegerät 8 dargestellt. Die Fahrtschreiberdatenverarbeitungsanlage 6 ist von dem Kraftfahrzeug 2 beabstandet. Zwischen dem Fahrtschreiber 4 und der Fahrtschreiberdatenverarbeitungsanlage 6 besteht jedoch eine Datenübertragungsverbindung 10, welche eine Funkstrecke 12 umfasst. Das Kartenlesegerät 8 ist über eine weitere Datenübertragungsverbindung 14, die als Kabelverbindung 16 ausgebildet ist, an die Fahrtschreiberdatenverarbeitungsanlage 6 angeschlossen.

In das Kartenlesegerät 8 ist eine als Chipkarte 18 ausgebildete Fahrtschreiberkarte, die hier eine Unternehmenskarte ist, eingeführt. Eine Sicherungsvorrichtung 20 mit einem zur Entnahme der Chipkarte 18 von dem Kartenlesegerät 8 entfernbaren Sicherungsbauteil 22 bildet eine mechanische Entnahmesicherung für die in das Kartenlesegerät 8 eingeführte Chipkarte 18.

Das Sicherungsbauteil 22 ist in diesem Ausführungsbeispiel eine die Chipkarte 18 umgreifende Abdeckhaube 24. Dabei ist die in das Kartenlesegerät 8 eingeführte Chipkarte 18 vollständig von dem Kartenlesegerät 8 und der Abdeckhaube 24 umschlossen, so dass die Chipkarte 18 von außerhalb des Kartenlesegerätes 8 nicht zugänglich ist.

Zu einem Verschließen der Chipkarte 18 in dem Kartenlesegerät 8 weist die Sicherungsvorrichtung 20 ein Schloss 26 auf, welches in geschlossenem Zustand das Sicherungsbauteil 22 an einen Gehäusegrundkörper 28 des Kartenlesegerätes 8 anschließt. In diesem Ausführungsbeispiel bildet der Gehäusegrundkörper 28 zugleich einen Standfuß des Kartenlesegerätes 8.

Zumindest während einer Datenübertragung über die Datenübertragungsverbindung 10 zwischen dem Fahrtschreiber 4 und der Fahrtschreiberdatenverarbeitungsanlage 6 verschließt die Sicherungsvorrichtung 20 die Chipkarte 18 in dem Kartenlesegerät 8. Dafür kann vorgesehen sein, dass die Datenübertragung erst dann gestartet wird, wenn die Chipkarte 18 in dem Kartenlesegerät 8 verschlossen ist.

Es kann beispielsweise auch vorgesehen sein, dass das Schloss 26 der Sicherungsvorrichtung 20 einen die Datenübertragung zwischen dem Fahrtschreiber 4 und der Fahrtschreiberdatenverarbeitungsanlage 6 in geschlossener Stellung des Schlosses 26 freigebenden Schlüsselschalter aufweist.

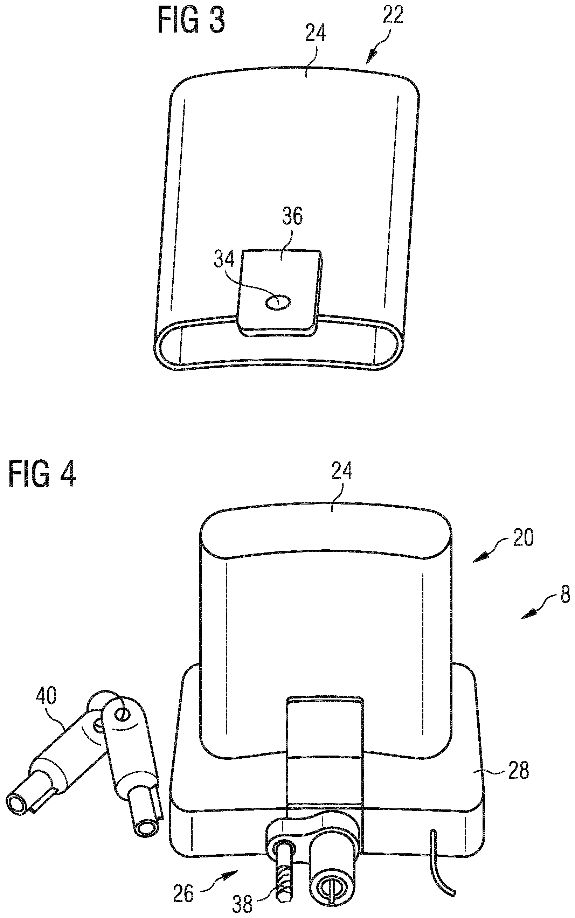

Figur 2 zeigt in einer perspektivischen Darstellung einen Gehäusegrundkörper 28 eines Kartenlesegeräts mit einer Chipkarte 18. Die Chipkarte 18 ist in durch einen Pfeil 29 gekennzeichneter Richtung in den Gehäusegrundkörper 28 und somit das Kartenlesegerät eingeführt. In dem Gehäusegrundkörper 28, der als Sockel des Kartenlesegeräts ausgebildet ist, ist eine Ausnehmung 30 angeordnet, welche Ausnehmung 30 Bestandteil eines Schlosses einer Sicherungsvorrichtung (vgl. Figuren 1, 4) für die Chipkarte 18 ist. Außerdem weist der Gehäusegrundkörper 28 ein Elektroverbindungskabel 32 auf, welches Elektroverbindungskabel 32 Bestandteil einer Kabelverbindung des Kartenlesegeräts mit einer Fahrtschreiberdatenverarbeitungsanlage ist.

Ein als Abdeckhaube 24 ausgebildetes Sicherungsbauteil 22 eines Kartenlesegeräts zeigt Figur 3 in einer perspektivischen Ansicht. Die Abdeckhaube 24 weist eine mit einer Ausnehmung 34 versehene Lasche 36 auf, welche Bestandteil eines Schlosses einer Sicherungsvorrichtung (vgl. Figuren 1, 4) ist.

In einer weiteren perspektivischen Ansicht zeigt Figur 4 ein Kartenlesegerät 8 mit einem Gehäusegrundkörper 28 sowie einer ein Schloss 26 und eine Abdeckhaube 24 aufweisenden Sicherungsvorrichtung 20. Ferner weist das Schloss 26 ein schwer zerstörbares Kabel 38, beispielsweise ein Stahlkabel, auf, mit welchem Kabel 38 das Kartenlesegerät 8 zusammen mit der Abdeckhaube 24 an einen anderen, insbesondere immobilen, Gegenstand angeschlossen werden kann. Für ein Öffnen des Schlosses 26 sind von einem Berechtigten zu verwahrende mechanische Schlüssel 40 vorgesehen.

## Patentansprüche

1. Mittels einer Datenübertragungsverbindung an eine Fahrtschreiberdatenverarbeitungsanlage anschließbares Kartenlesegerät für eine als Chipkarte ausgebildete Fahrtschreiberkarte, **dadurch gekennzeichnet, dass** das Kartenlesegerät (8) eine Sicherungsvorrichtung (20) mit einem zur Entnahme der in das Kartenlesegerät eingeführten Chipkarte (18) entfernbaren Sicherungsbauteil (22) aufweist, wobei die Sicherungsvorrichtung (20) eine mechanische Entnahmesicherung für die in das Kartenlesegerät (8) eingeführte Chipkarte (18) bildet, dass die Sicherungsvorrichtung (20) ein Schloss (26) zum Verschließen der Chipkarte (18) in dem Kartenlesegerät (8) aufweist, dass das Schloss (26) derart ausgebildet ist, dass es in seinem geschlossenen Zustand das Sicherungsbauteil (22) an einem Gehäusegrundkörper (28) des Kartenlesegerätes (8) anschließt, wobei der Gehäusegrundkörper (28) zugleich einen Standfuß des Kartenlesegerätes (8) bildet, und dass das Sicherungsbauteil (22) eine die Chipkarte (18) umgreifende Abdeckhaube (24) ist, wobei die in das Kartenlesegerät (8) eingeführte Chipkarte (18) vollständig von dem Kartenlesegerät (8) und der Abdeckhaube (24) umschlossen ist, so dass die Chipkarte (18) von außerhalb des Kartenlesegerätes (8) nicht zugänglich ist.

2. Kartenlesegerät nach Anspruch 1, **dadurch gekennzeichnet, dass** das Sicherungsbauteil (22) an einer Seite entgegen einer Einführrichtung der Chipkarte (18) in das Kartenlesegerät (8) einen Kartenanschlag für die Chipkarte (18) aufweist.

3. Kartenlesegerät nach Anspruch 1 und 2, **dadurch gekennzeichnet, dass** die Abdeckhaube (24) an ihrer Innenseite entgegen der Einführrichtung der Chipkarte (18) in das Kartenlesegerät (8) den Kartenanschlag aufweist.

4. Kartenlesegerät nach einem der vorhergehenden Ansprüche, **dadurch gekennzeichnet, dass** eine die eingeführte Chipkarte (18) festhaltende Rast- oder Klemmeinrichtung vorgesehen ist.

5. Verwendung eines Kartenlesegeräts (8) nach einem der vorhergehenden Ansprüche in einer einen Fahrtschreiber (4) und eine Fahrtschreiberdatenverarbeitungsanlage (6) aufweisenden Anordnung (1) zur Fahrtschreiberdatenübertragung zwischen dem Fahrtschreiber (4) und der Fahrtschreiberdatenverarbeitungsanlage (6),
wobei der Fahrtschreiber (4) in einem Kraftfahrzeug (2) angeordnet und die Fahrtschreiberdatenverarbeitungsanlage (6) von dem Kraftfahrzeug (2) beabstandet ist und wobei zu einer die Fahrtschreiberdatenübertragung freigebenden Authentifizierung mittels einer als Chipkarte (18) ausgebildeten Fahrtschreiberkarte das die Chipkarte (18) aufweisende Kartenlesegerät (8) vorgesehen ist, wobei sowohl zwischen dem Fahrtschreiber (4) und der Fahrtschreiberdatenverarbeitungsanlage (6) als auch zwischen der Fahrtschreiberdatenverarbeitungsanlage (6) und dem Kartenlesegerät (8) jeweils eine Datenübertragungsverbindung (10, 14) besteht und wobei die Datenübertragungsverbindung (10) zwischen dem Fahrtschreiber (4) und der Fahrtschreiberdatenverarbeitungsanlage (6) eine Funkstrecke (12) umfasst,
wobei die Sicherungsvorrichtung (20) des Kartenlesegeräts (8) die Chipkarte (18) während der Fahrtschreiberdatenübertragung über die Datenübertragungsverbindung (10) zwischen dem Fahrtschreiber (4) und der Fahrtschreiberdatenverarbeitungsanlage (6) in dem Kartenlesegerät (8) verschließt.

6. Verwendung nach Anspruch 5, **dadurch gekennzeichnet, dass** die Sicherungsvorrichtung (20) ein Schloss (26) zum Verschließen der Chipkarte (18) in dem Kartenlesegerät (8) aufweist und dass das Schloss (26) einen die Fahrtschreiberdatenübertragung zwischen dem Fahrtschreiber (4) und der Fahrtschreiberdatenverarbeitungsanlage (6) in geschlossener Stellung des Schlosses (26) freigebenden Schlüsselschalter aufweist.

## Claims

1. Card reader for a tachograph card formed as a chip card, which card reader can be connected by means of a data transmission link to a tachograph data-processing system, **characterized in that** the card reader (8) has a security device (20) having a security component (22) that can be removed for the removal of the chip card (18) inserted into the card reader, wherein the security device (20) forms a mechanical removal safeguard for the chip card (18) inserted into the card reader (8), **in that** the security device (20) has a lock (26) for locking the chip card (18) in the card reader (8), **in that** the lock (26) is formed in such a way that, in the closed state thereof, it adjoins the security component (22) on a housing base (28) of the card reader (8), wherein the housing base (28) simultaneously forms a stand of the card reader (8), and **in that** the security component (22) is a covering hood (24) that engages around the chip card (18), wherein the chip card (18) inserted into the card reader (8) is enclosed completely by the card reader (8) and the covering hood (24), so that the chip card (18) is not accessible from outside the card reader (8).

2. Card reader according to Claim 1, **characterized in that** the security component (22) has a card stop for the chip card (18) on a side counter to an insertion direction of the chip card (18) into the card reader (8).

3. Card reader according to Claim 1 and 2, **characterized in that** the covering hood (24) has the card stop on its inner side counter to the insertion direction of the chip card (18) into the card reader (8).

4. Card reader according to one of the preceding claims, **characterized in that** a latching or clamping device holding the inserted chip card (18) firmly is provided.

5. Use of a card reader (8) according to one of the preceding claims in an arrangement (1) having a tachograph (4) and a tachograph data-processing system (6) for tachograph data transmission between the tachograph (4) and the tachograph data-processing system (6),
wherein the tachograph (4) is arranged in a motor vehicle (2) and the tachograph data-processing system (6) is at a distance from the motor vehicle (2), and wherein, for the purpose of authentication releasing the tachograph data transmission by means of a tachograph card formed as a chip card (18), the card reader (8) having the chip card (18) is provided,
wherein, both between the tachograph (4) and the tachograph data-processing system (6) and between the tachograph data-processing system (6) and the card reader (8), there is in each case a data transmission link (10, 14), and wherein the data transmission link (10) between the tachograph (4) and the tachograph data-processing system (6) comprises a radio link (12),
wherein the security device (20) of the card reader (8) locks the chip card (18) in the card reader (8) during the tachograph data transmission between the tachograph (4) and the tachograph data-processing system (6) via the data transmission link (10).

6. Use according to Claim 5, **characterized in that** the security device (20) has a lock (26) for locking the chip card (18) in the card reader (8), and **in that** the lock (26) has a lock switch which releases the tachograph data transmission between the tachograph (4) and the tachograph data-processing system (6) in the closed position of the lock (26).

## Revendications

1. Appareil de lecture de carte pouvant être relié à un système de traitement de données de tachygraphe au moyen d'une liaison de transmission de données pour une carte tachygraphique réalisée sous la forme d'une carte à puce, **caractérisé en ce que** l'appareil de lecture de carte (8) comporte un dispositif de sécurité (20) comprenant un composant de sécurité (22) amovible permettant de retirer la carte à puce (18) introduite dans l'appareil de lecture de carte, dans lequel le dispositif de sécurité (20) constitue une sécurité contre le retrait mécanique de la carte à puce (18) insérée dans l'appareil de lecture de carte (8), **en ce que** le dispositif de sécurité (20) comporte un verrou (26) permettant de verrouiller la carte à puce (18) dans l'appareil de lecture de carte (8), **en ce que** le verrou (26) est conçu de manière à ce que, dans son état verrouillé, il relie le composant de sécurité (22) à un corps de base de boîtier (28) de l'appareil de lecture de carte (8), dans lequel le corps de base de boîtier (28) constitue simultanément un support de l'appareil de lecture de cartes (8), et **en ce que** le composant de sécurité (22) est un capot (24) qui enserre la carte à puce (18), dans lequel la carte à puce (18) insérée dans l'appareil de lecture de carte (8) est entièrement entourée par l'appareil de lecture de carte (8) et le capot (24), de manière à ce que la carte à puce (18) ne soit pas accessible de l'extérieur de l'appareil de lecture de carte (8).

2. Appareil de lecture de carte selon la revendication 1, **caractérisé en ce que** le composant de sécurité (22) présente d'un côté une butée de carte pour la carte à puce (18), qui est opposée à une direction d'insertion de la carte à puce (18) dans l'appareil de lecture de carte (8).

3. Appareil de lecture de carte selon les revendications 1 et 2, **caractérisé en ce que** le capot (24) présente sur son côté intérieur la butée de carte opposée à la direction d'insertion de la carte à puce (18) dans l'appareil de lecture de carte (8).

4. Appareil de lecture de carte selon l'une des revendications précédentes, **caractérisé en ce qu'**il est prévu un dispositif d'encliquetage ou de serrage maintenant la carte à puce (18) introduite.

5. Utilisation d'un appareil de lecture de carte (8) selon l'une des revendications précédentes dans un dispositif (1) comportant un tachygraphe (4) et un système de traitement de données de tachygraphe (6) pour la transmission de données de tachygraphe entre le tachygraphe (4) et le système de traitement de données de tachygraphe (6),
dans laquelle le tachygraphe (4) est disposé dans un véhicule automobile (2) et le système de traitement de données de tachygraphe (6) est distant du véhicule automobile (2) et dans laquelle l'appareil de lecture de carte (8) comportant la carte à puce (18) est prévu pour une authentification autorisant la transmission de données de tachygraphe au moyen d'une carte tachygraphique réalisée sous la forme d'une carte à puce (18), dans laquelle une liaison de transmission de données (10, 14) est respectivement établie à la fois entre le tachygraphe (4) et le système de traitement de données de tachygraphe (6) et entre le système de traitement de données de tachygraphe (6) et l'appareil de lecture de carte (8) et dans lequel la liaison de transmission de données (10) entre le tachygraphe (4) et le système de traitement de données de tachygraphe (6) comprend une liaison radio (12),
dans laquelle le dispositif de sécurité (20) de l'appareil de lecture de carte (8) verrouille la carte à puce (18) dans l'appareil de lecture de carte (8) pendant la transmission de données de tachygraphe par l'intermédiaire de la liaison de transmission de données (10) entre le tachygraphe (4) et le système de traitement de données de tachygraphe (6).

6. Utilisation selon la revendication 5, **caractérisée en ce que** le dispositif de sécurité (20) comporte un verrou (26) permettant de verrouiller la carte à puce (18) dans l'appareil de lecture de carte (8) et **en ce que** le verrou (26) comporte un interrupteur à clé qui autorise la transmission de données de tachygraphe entre le tachygraphe (4) et le système de traitement de données de tachygraphe (6) dans la position fermée du verrou (26) .
